# EUROPÄISCHE PATENTANMELDUNG

(11) **EP 2 202 434 A1**
(43) Veröffentlichungstag der Anmeldung: **30.06.2010**
(21) Anmeldenummer: 09014828.9
(22) Anmeldetag: 30.11.2009
(51) Int. Cl.: F16J 15/32, F16J 15/46

(54) **Dichtung**

(30) Priorität: 17.12.2008 DE 102008062414
(71) Anmelder: Carl Freudenberg KG, 69469 Weinheim (DE)
(72) Erfinder: Schmied, Benno, 67071 Ludwigshafen (DE); Müller-Niehuus, Kristian, Dr., 60322 Frankfurt (DE); Schauber, Thomas, Dr., 69502 Hemsbach (DE)

(57) **Zusammenfassung**

Dichtung, umfassend zumindest eine Dichtlippe (1), die durch ein ringförmiges Kraftübertragungselement (2) in radialer Richtung (3) an eine abzudichtende Oberfläche (4) eines abzudichtenden Maschinenelements (5) andrückbar ist. Das Kraftübertragungselement (2) weist einen durch ein Stellmittel (6) in radialer Richtung (3) beiderseits veränderbaren wirksamen Durchmesser (7) auf.

## Beschreibung

### Technisches Gebiet

Die Erfindung betrifft eine Dichtung, umfassend zumindest eine Dichtlippe, die durch ein ringförmiges Kraftübertragungselement in radialer Richtung an eine abzudichtende Oberfläche eines abzudichtenden Maschinenelements andrückbar ist.

### Stand der Technik

Eine solche Dichtung ist allgemeint bekannt und beispielsweise als Radialwellendichtring ausgebildet. Das Kraftübertragungselement ist dabei durch eine Ringwendelfeder aus einem metallischen Werkstoff gebildet, die dafür sorgt, dass die Dichtlippe während der bestimmungsgemäßen Verwendung der Dichtung stets an die abzudichtende Oberfläche dichtend angepresst wird. Die Ringwendelfeder soll Relaxationen des elastomeren Werkstoffs der Dichtlippe und deren betriebsbedingten Verschleiß ausgleichen und auch dann für eine sichere Abdichtung sorgen, wenn im abzudichtenden Raum nur ein geringer relativer Überdruck herrscht, durch den allein die Dichtlippe nicht ausreichend an die abzudichtende Oberfläche des abzudichtenden Maschinenelements, beispielsweise eine Welle, angedrückt würde.

Nachteilig bei einem solchen Kraftübertragungselement ist, dass es durch Verschmutzung störanfällig wird und dass die vom Kraftübertragungselement ausgeübte Radialkraft während der bestimmungsgemäßen Verwendung der Dichtung im Wesentlichen konstant ist. Unterschiedlichen Betriebsbedingungen kann dadurch praktisch nicht Rechnung getragen werden. Die durch das Kraftübertragungselement erzeugte Anpressung der Dichtlippe an die abzudichtende Oberfläche ist z. B. auch dann hoch, wenn es für die Dichtwirkung gar nicht nötig wäre; dadurch entsteht während des Betriebs an der Dichtlippe eine unnötig hohe Reibung, daraus resultierend Wärme und ein unerwünscht hoher Verschleiß der Dichtung durch Wärmeeinwirkung. Wird die vorbekannte Ringwendelfeder demgegenüber derart ausgelegt, dass sie die Dichtlippe nur mit geringer Vorspannung an die abzudichtende Oberfläche des abzudichtenden Maschinenelements andrückt, besteht die Gefahr von Undichtigkeiten; die Gebrauchseigenschaften sind dann nicht zufriedenstellend.

### Darstellung der Erfindung

Der Erfindung liegt die Aufgabe zugrunde, eine Dichtung der eingangs genannten Art derart weiter zu entwickeln, dass diese ein funktionstechnisch verbessertes und zuverlässiges Kraftübertragungselement aufweist und dass deren Dicht- und Reibleistung während des Betriebs der Dichtung dynamisch einstellbar ist, um den betriebsbedingten Verschleiß der Dichtlippe auf ein Minimum zu reduzieren und dennoch gute Gebrauchseigenschaften während einer langen Gebrauchsdauer zu erreichen.

Gelöst wird diese Aufgabe durch die Merkmale von Patentanspruch 1. Auf vorteilhafte Ausgestaltungen nehmen die Unteransprüche Bezug.

Zur Lösung der Aufgabe ist es vorgesehen, dass das Kraftübertragungselement einen durch ein Stellmittel in radialer Richtung beiderseits veränderbaren wirksamen Durchmesser aufweist.
Durch den in radialer Richtung einstellbaren wirksamen Durchmesser, wobei der Durchmesser an die jeweiligen Gegebenheiten des Anwendungsfalles angepasst ist, können Dicht- und Reibleistung bewusst verändert und an unterschiedliche Betriebsbedingungen angepasst werden. Durch das Stellmittel wird die Größe des für die Anpressung der Dichtlippe wirksamen Durchmessers des Kraftübertragungselements eingestellt und dadurch die Anpressung der Dichtlippe an die abzudichtende Oberfläche des abzudichtenden Maschinenelements.
Ist eine vergleichsweise große Anpressung der Dichtlippe an die abzudichtende Oberfläche gewünscht, wird das Stellmittel derart betätigt, dass die Kraft, mit der das Kraftübertragungselement auf die Dichtlippe drückt, vergrößert wird. Dies kann beispielsweise dann sinnvoll sein, wenn innerhalb des abzudichtenden Raums ein Überdruck gegenüber der Umgebung abgedichtet werden soll, der allein für eine ausreichende Anpressung der Dichtlippe an die abzudichtende Oberfläche nicht ausreichen würde.
Sinkt demgegenüber der Druck innerhalb des abzudichtenden Raums, wird das Stellmittel z. B. derart betätigt, dass das Kraftübertragungselement die Dichtlippe mit relativ geringerer Kraft beaufschlagt und dadurch die Dichtlippe die abzudichtende Oberfläche nur noch mit geringerer Kraft dichtend berührt. Durch die reduzierte Anpresskraft auf die Dichtlippe wird die Reibleistung verringert und dadurch auch deren Verschleiß.
Die Kraft auf die Dichtlippe durch das Kraftübertragungselement ist dadurch auf die jeweiligen Betriebsbedingungen abgestimmt, so dass sich ein ausgezeichneter Kompromiss zwischen guter Dichtwirkung einerseits und geringer Reibleistung verbunden mit geringem Verschleiß andererseits ergibt.

Besonders gute Gebrauchseigenschaften weist die Dichtung auf, wenn der wirksame Durchmesser stufenlos einstellbar ist. Durch die stufenlose Einstellbarkeit des Durchmessers kann die Anpresskraft, mit der das Kraftübertragungselement die Dichtlippe an die abzudichtende Oberfläche andrückt, besonders feinfühlig angepasst werden, so dass die Dichtung besonders lange Standzeiten bei gleich bleibend guten Gebrauchseigenschaften aufweist.

Das Kraftübertragungselement kann einen im Wesentlichen kreisrunden Querschnitt aufweisen. Hierbei ist von Vorteil, dass die übliche Gestalt von Dichtungen, z. B. Radialwellendichtringen, unverändert erhalten bleiben kann und vorbekannte zur Anwendung gelangende Ringwendelfedern aus metallischem Werkstoff einfach gegen passende erfindungsgemäße Kraftübertragungselemente austauschbar sind.

Die Dichtlippe kann in einem in radialer Richtung benachbarten Bereich einen Sitz für das Kraftübertragungselement aufweisen, der kongruent zum Kraftübertragungselement ausgebildet ist. Im Fall eines Kraftübertragungselements mit im Wesentlichen kreisrundem Querschnitt wäre der Sitz im Wesentlichen halbkreis- bis dreiviertelkreisförmig ausgebildet. Das Kraftübertragungselement wird dadurch sicher innerhalb seines Sitzes in der Dichtung gehalten und ist stets optimal zur Dichtlippe positioniert.

Das Kraftübertragungselement kann durch einen Schlauch aus elastisch nachgiebigem Werkstoff gebildet sein, wobei das Stellmittel im Schlauch angeordnet ist. Der Schlauch kann aus einem Elastomer gebildet sein, oder aus einem TPU oder einem PU. Ein solches Kraftübertragungselement ist besonders vorteilhaft, weil es kostengünstig in einer Vielzahl von Abmessungen einfach herstellbar ist. Es ist besonders gut geeignet für die Einstellung eines wirksamen Durchmessers, weil ein Aufpumpen des Schlauchs eine Vergrößerung seines Schlauchdurchmessers, eine Reduzierung des wirksamen Durchmessers und dadurch eine Erhöhung der Anpresskraft auf die Dichtlippe zur Folge hat, während ein Ablassen des Druckmediums zu einer Verkleinerung des Schlauchdurchmessers, einer Vergrößerung des wirksamen Durchmessers und dadurch zu einer Reduzierung der Anpresskraft auf die Dichtlippe führt. Der Schlauch kann auch aus einem TPE bestehen.

Der Schlauch kann auf der der Dichtlippe radial abgewandten Seite von einer Bandage aus einem Werkstoff anliegend umschlossen sein, welcher einen höheren Elastizitätsmodul als der Werkstoff des Kraftübertragungselements aufweist. Die Bandage kann durch einen Blechring gebildet sein. Die Bandage ist zur Abstützung des Schlauchs vorgesehen und bildet das Widerlager bei Druckbeaufschlagung des Schlauchs. Bei Druckbeaufschlagung kann sich der Schlauch durch die Anordnung der Bandage in Richtung der Bandage nicht ausdehnen; eine Ausdehnung des Schlauchs bei Druckbeaufschlagung kann im Wesentlichen nur radial in Richtung der Dichtlippe erfolgen. Dadurch wird die Anpressung der Dichtlippe an die abzudichtenden Oberfläche bedarfsweise variiert.

Die Bandage und der Schlauch können kraft- und/oder formschlüssig verbunden sein. Eine solche Verbindung kann beispielsweise dadurch erfolgen, dass der Schlauch auf der der Dichtlippe radial abgewandten Seite eine U-förmige Aufnahme für die Bandage aufweist. Dazu hat die Bandage bevorzugt einen rechteckigen Querschnitt, der von der U-förmigen Aufnahme an drei Seiten umgeben ist. Die U-förmige Aufnahme ist bevorzugt einstückig und materialeinheitlich mit dem Schlauch ausgebildet. Die Dichtung ist dadurch einfach und kostengünstig herstellbar.

Der Schlauch kann, in Umfangsrichtung betrachtet, Bereiche unterschiedlicher Wandstärke aufweisen. Diese Bereiche unterschiedlicher Wandstärke bauchen bei Betätigung des Stellmittels unterschiedlich stark aus, so dass dadurch eine gezielte Veränderung der Geometrie des Schlauchs bei Betätigung des Stellmittels erreicht werden kann.

Die Bereiche unterschiedlicher Wandstärke können kontinuierlich und ohne sprunghafte Richtungsänderungen ineinander übergehend ausgebildet sein. Hierbei ist von Vorteil, dass die mechanischen Belastungen des Schlauchs bei Betätigung des Stellmittels auf ein Minimum reduziert sind. Unerwünschte, die Gebrauchsdauer verringernde Kerbwirkungen, die beispielsweise durch sprunghafte Richtungsänderungen entstehen, werden dadurch vermieden.

Der Bereich der geringsten Wandstärke ist bevorzugt der Dichtlippe in radialer Richtung zugewandt. Der Bereich der größten Wandstärke ist der Dichtlippe in radialer Richtung bevorzugt abgewandt. Durch eine solche Verteilung der Wandstärken baucht der Schlauch bei Druckbeaufschlagung des Stellmittels im Bereich der geringsten Wandstärke stärker aus als in den anderen Bereichen, so dass dadurch die Kraft des Kraftübertragungselements besonders wirksam und gezielt auf die Dichtlippe übertragbar ist. Die Bereiche der größten Wandstärke dehnen sich demgegenüber bei entsprechender Dimensionierung nahezu nicht. Der Druckerzeuger kann dadurch klein dimensioniert und deshalb kostengünstig sein.
Das Verhältnis aus der größten Wandstärke zur geringsten Wandstärke ist bevorzugt zumindest 1, weiter bevorzugt 3.

Das Stellmittel ist druckbeaufschlagbar und kann aus Luft oder Öl bestehen. Derartige Medien sind im Bereich der Pneumatik oder Hydraulik üblich und deshalb gut beherrschbar. Gelangt als Stellmittel Luft zur Anwendung, ist von Vorteil, dass dieses Medium gut umweltverträglich ist und durch seine Kompressibilität besonders weich einstellbar. Gelangt demgegenüber als Stellmittel Öl zur Anwendung, ist von Vorteil, dass dieses Medium im Wesentlichen inkompressibel ist und dass das Kraftübertragungselement dadurch besonders genau einstellbar ist.

Auch Gase, wie zum Beispiel N₂ oder Ar können als Stellmittel zur Anwendung gelangen.

Nach einer anderen Ausgestaltung kann das Kraftübertragungselement durch einen Seilzug gebildet sein.
Das Stellmittel kann durch einen die Länge des Seilzugs veränderbaren Stellmotor gebildet sein. Eine solche Ausgestaltung ist besonders dann von Vorteil, wenn in der Peripherie der Dichtungsanordnung weder Pneumatik noch Hydraulik verfügbar ist, die für die Betätigung des Kraftübertragungselements genutzt werden könnte.

Generell besteht die Möglichkeit, dass die Dichtung mit ihrer Dichtlippe radial innenseitig, beispielsweise auf der abzudichtenden Oberfläche einer abzudichtenden Welle aufliegt oder radial außenseitig die Innenwandung eines hohlzylindrischen Gehäuses anliegend und dichtend berührt.

### Kurzbeschreibung der Zeichnung

In den Figuren sind zwei Ausführungsbeispiele gezeigt. Diese zeigen jeweils in schematischer Darstellung:
- Fig. 1: ein erstes Ausführungsbeispiel der erfindungsgemäßen Dichtung, bei der das ringförmige Kraftübertragungselement durch einen Schlauch aus elastomerem Werkstoff gebildet ist,
- Fig. 2: ein zweites Ausführungsbeispiel, bei dem das Kraftübertragungselement durch einen Seilzug gebildet ist,
- Fig. 3: Ein drittes Ausführungsbeispiel, ähnlich dem Ausführungsbeispiel aus Fig. 1, bei dem der Schlauch auf der der Dichtlippe radial abgewandten Seite von einer Bandage umschlossen ist.

### Ausführung der Erfindung

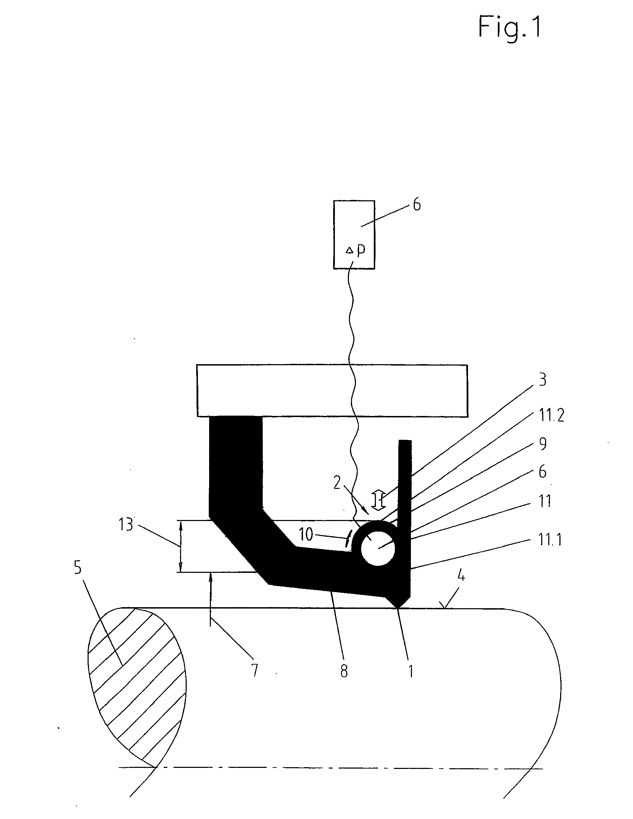

In den Figuren 1 bis 3 ist jeweils ein Ausführungsbeispiel einer erfindungsgemäßen Dichtung gezeigt, wobei die Kraftübertragungselemente 2 jeweils unterschiedlich ausgebildet sind. Die beiden Dichtungen sind jeweils als Radialwellendichtringe ausgebildet, mit einer dynamisch beanspruchten Dichtlippe 1 aus elastomerem Werkstoff, die die abzudichtende Oberfläche 4 eines abzudichtenden Maschinenelements 5, das hier als Welle ausgebildet ist, unter radialer Vorspannung dichtend umschließt.
Erfindungsgemäß ist es vorgesehen, dass der wirksame Durchmesser 7 des Kraftübertragungselements 2 durch Stellmittel 6 in radialer Richtung 3 der Dichtung während ihres Betriebs einstellbar ist. Durch Betätigung des Stellmittels 6 kann bewirkt werden, dass der wirksame Durchmesser 7 des Kraftübertragungselements 2, abhängig von den jeweiligen Gegebenheiten des Anwendungsfalls und den Betriebsbedingungen, größer oder kleiner eingestellt wird.
In allen Ausführungsbeispielen ist es so, dass der wirksame Durchmesser 7 stufenlos veränderbar ist.

In Fig. 1 ist das erste Ausführungsbeispiel einer erfindungsgemäßen Dichtung gezeigt. Das Kraftübertragungselement 2 ist durch einen Schlauch 9 aus einem flexiblen Werkstoff (Elastomer, PU, TPU,) gebildet, wobei der Schlauch 9 einen im Wesentlichen kreisrunden Querschnitt aufweist und wobei innerhalb des Schlauchs 9 als Stellmittel 6 ein druckbeschlagbares Medium angeordnet ist. Das Stellmittel 6 kann beispielsweise Luft oder Öl sein.

Unter dem einstellbaren wirksamen Durchmesser 7 wird der Durchmesser verstanden, der bezogen auf die Anpresskraft der Dichtlippe 1 auf die abzudichtende Oberfläche 4 wirksam ist. Dieser wirksame Durchmesser 7 sorgt für die mehr oder weniger starke Anpressung der Dichtlippe 1 an die abzudichtende Oberfläche 4 des Maschinenelements 5.

Das als Schlauch 9 ausgebildete Kraftübertragungselement 2 aus elastomerem Werkstoff ist insofern besonders vorteilhaft, als sich der elastomere Werkstoff bei Druckbeaufschlagung des Stellmittels 6 elastisch dehnt und dadurch den äußeren Schlauchdurchmesser 13 ändert. Bei Druckbeaufschlagung des Stellmittels 6 wird der äußere Schlauchdurchmesser 13 größer, der auf die Dichtlippe 1 wirksame, veränderbare Durchmesser 7 dadurch kleiner und der Anpressdruck der Dichtlippe 1 auf die abzudichtende Oberfläche 4 deshalb erhöht.
Wird demgegenüber die Druckbeaufschlagung auf das Stellmittel 6 wieder reduziert, reduziert sich auch der äußere Schlauchdurchmesser 13 und der wirksame Durchmesser 7 vergrößert sich; daraus resultierend verringert sich der Anpressdruck der Dichtlippe 1 an der abzudichtenden Oberfläche 4.

Im hier dargestellten Ausführungsbeispiel weist der Schlauch 9 entlang seiner Umfangsrichtung 10 Bereiche unterschiedlicher Wandstärke 11 auf. Die unterschiedlichen Wandstärken 11.1, 11.2 gehen kontinuierlich und ohne sprunghafte Richtungsänderung ineinander über, wobei der Bereich der geringsten Wandstärke 11.1 der Dichtlippe 1 in radialer Richtung 3 zugewandt und der Bereich der größten Wandstärke 11.2 der Dichtlippe 1 in radialer Richtung 3 abgewandt ist; die geringste Wandstärke 11.1 und die größte Wandstärke 11.2 liegen einander demnach in radialer Richtung 3 gegenüber. Bei Druckbeaufschlagung des Stellmittels 6 verformt sich der Schlauch 9 im Bereich der geringsten Wandstärke 11.1 stärker, weil er in diesem Bereich nachgiebiger ist, als im Bereich der größten Wandstärke 11.2 und der übrigen Bereiche. Bei Druckbeaufschlagung baucht der Schlauch 9 deshalb radial in Richtung 3 der Dichtlippe 1 stärker aus und bedingt dadurch eine Erhöhung der Anpressung der Dichtlippe 1 an die abzudichtende Oberfläche 4.

Durch die asymmetrische Wandung des Schlauchs 9 ist eine gezielte Aufdehnung des Schlauchs 9 in Belastungsvorzugrichtung, hier in radialer Richtung 3, möglich und sinnvoll.

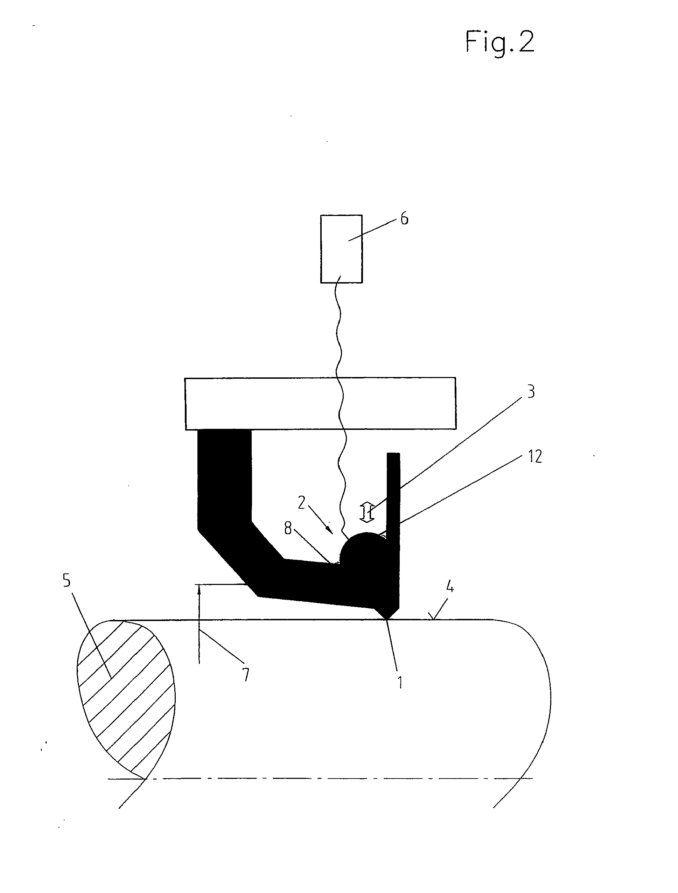

In Fig. 2 ist ein zweites Ausführungsbeispiel der erfindungsgemäßen Dichtung gezeigt, das sich von dem zuvor beschriebenen Ausführungsbeispiel gemäß Fig. 1 durch ein abweichend gestaltetes ringförmiges Kraftübertragungselement 2 unterscheidet. Das Kraftübertragungselement 2 ist in diesem Ausführungsbeispiel durch einen Seilzug 12 gebildet, dessen Länge durch einen Stellmotor 6 veränderbar ist.
In Abhängigkeit von der benötigten Anpresskraft der Dichtlippe 1 an der abzudichtenden Oberfläche 4 des abzudichtenden Maschinenelements 5 wird die Länge des Seilzugs 12 entweder verkürzt, wodurch ein kleinerer wirksamer Durchmesser 7 und eine größere Anpressung der Dichtlippe 1 an der abzudichtenden Oberfläche 4 erreicht wird oder verlängert, wodurch der wirksame Durchmesser 7 größer und die Anpressung der Dichtlippe 1 an der abzudichtenden Oberfläche 4 geringer wird.

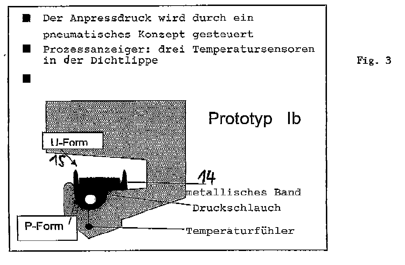

In Fig. 3 ist ein drittes Ausführungsbeispiel, ähnlich dem Ausführungsbeispiel aus Fig. 1 gezeigt. Der Schlauch 9 ist auf der der Dichtlippe 1 radial abgewandten Seite von einer Bandage 14 aus einem Werkstoff umschlossen, welcher einen höheren Elastizitätsmodul als der Werkstoff des Kraftübertragungselements aufweist. In diesem Ausführungsbeispiel besteht die Bandage 14 aus einem Blechring, der einen rechteckigen Querschnitt aufweist und ortsfest in einer U-förmigen Aufnahme 15 angeordnet ist. Die U-förmige Aufnahme 15 bildet einen einstückigen und materialeinheitlichen Bestandteil des Schlauchs 9. Die Bandage 14 bildet ein Widerlager für die Anpresskraft des Kraftübertragungselements.

Der Vorteil der beanspruchten Dichtung ist darin zu sehen, dass die Dicht- und Reibleistung während der Betriebs der Dichtung, abhängig von den dann aktuellen Betriebsbedingungen, einstellbar ist. Betriebsbedingter Verschleiß wird durch die gezielte Anpassung der Anpressung der Dichtlippe 1 an die abzudichtende Oberfläche 4 auf ein Minimum reduziert und die Standzeit der Dichtung dadurch erhöht.

Außerdem ist von hervorzuhebendem Vorteil, dass Ringwendelfedern aus metallischem Werkstoffen, die bisher zur Anwendung gelangten, durch die ringförmigen Kraftübertragungselemente 2 einfach ausgetauscht werden können, da der Sitz der Ringwendelfedern als Sitz 8 für die Kraftübertragungselemente 2 genutzt werden kann.

## Patentansprüche

1. Dichtung, umfassend zumindest eine Dichtlippe (1), die durch ein ringförmiges Kraftübertragungselement (2) in radialer Richtung (3) an eine abzudichtende Oberfläche (4) eines abzudichtenden Maschinenelements (5) andrückbar ist, **dadurch gekennzeichnet, dass** das Kraftübertragungselement (2) einen durch ein Stellmittel (6) in radialer Richtung (3) beiderseits veränderbaren wirksamen Durchmesser (7) aufweist.

2. Dichtung nach Anspruch 1, **dadurch gekennzeichnet, dass** der wirksame Durchmesser (7) stufenlos einstellbar ist.

3. Dichtung nach einem der Ansprüche 1 oder 2, **dadurch gekennzeichnet, dass** das Kraftübertragungselement (2) einen im wesentlichen kreisrunden Querschnitt aufweist.

4. Dichtung nach einem der Ansprüche 1 bis 3, **dadurch gekennzeichnet, dass** die Dichtlippe (1) in einem in radialer Richtung (3) benachbarten Bereich einen Sitz (8) für das Kraftübertragungselement (2) aufweist, der kongruent zum Kraftübertragungselement (2) ausgebildet ist.

5. Dichtung nach einem der Ansprüche 1 bis 4, **dadurch gekennzeichnet, dass** das Kraftübertragungselement (2) durch einen Schlauch (9) aus elastisch nachgiebigem Werkstoff gebildet ist und dass das Stellmittel (6) im Schlauch (9) angeordnet ist.

6. Dichtung nach Anspruch 5, **dadurch gekennzeichnet, dass** der Schlauch (9) aus einem Elastomer gebildet ist.

7. Dichtung nach Anspruch 5, **dadurch gekennzeichnet, dass** der Schlauch (9) aus einem TPU oder PU gebildet ist.

8. Dichtung nach einem der Ansprüche 1 bis 7, **dadurch gekennzeichnet, dass** der Schlauch (9) auf der der Dichtlippe (1) radial abgewandten Seite von einer Bandage (14) aus einem Werkstoff anliegend umschlossen ist, welcher einen höheren Elastizitätsmodul als der Werkstoff des Kraftübertragungselements (2) aufweist.

9. Dichtung nach Anspruch 8, **dadurch gekennzeichnet, dass** die Bandage (14) durch einen Blechring gebildet ist.

10. Dichtung nach einem der Ansprüche 8 oder 9, **dadurch gekennzeichnet, dass** die Bandage (14) und der Schlauch (9) kraft- und/oder formschlüssig verbunden sind.

11. Dichtung nach einem der Ansprüche 5 bis 10, **dadurch gekennzeichnet, dass** der Schlauch (9), in Umfangsrichtung (10) betrachtet, Bereiche unterschiedlicher Wandstärke (11) aufweist.

12. Dichtung nach Anspruch 11, **dadurch gekennzeichnet, dass** die Bereiche unterschiedlicher Wandstärke (11) kontinuierlich und ohne sprunghafte Richtungsänderungen ineinander übergehend ausgebildet sind.

13. Dichtung nach einem der Ansprüche 11 oder 12, **dadurch gekennzeichnet, dass** der Bereich der geringsten Wandstärke (11.1) der Dichtlippe (1) in radialer Richtung (3) zugewandt ist.

14. Dichtung nach einem der Ansprüche 11 bis 13, **dadurch gekennzeichnet, dass** der Bereich der größten Wandstärke (11.2) der Dichtlippe (1) in radialer Richtung (3) abgewandt ist.

15. Dichtung nach einem der Ansprüche 1 bis 14, **dadurch gekennzeichnet, dass** das Stellmittel (6) druckbeaufschlagbar ist.

16. Dichtung nach einem der Ansprüche 1 bis 15, **dadurch gekennzeichnet, dass** das Stellmittel (6) Luft oder Öl ist.

17. Dichtung nach einem der Ansprüche 1 bis 4, **dadurch gekennzeichnet, dass** das Kraftübertragungselement (2) durch einen Seilzug (12) gebildet ist.

18. Dichtung nach Anspruch 17, **dadurch gekennzeichnet, dass** Stellmittel (6) durch einen die Länge des Seilzugs (12) veränderbaren Stellmotor gebildet ist.
